# FASCICULE DE BREVET EUROPEEN

(11) **EP 1 252 971 B1**
(45) Date de publication et mention de la délivrance du brevet: **23.05.2007**
(21) Numéro de dépôt: 01810408.3
(22) Date de dépôt: 25.04.2001
(51) Int. Cl.: B23Q 39/04

(54) **Structure de machine d'usinage**
Struktur einer Bearbeitungsmaschine
Machine tool structure

(43) Date de publication de la demande: 30.10.2002
(73) Titulaire: TORNOS S.A., 2740 Moutier (CH)
(72) Inventeur: Schuettel, Patrick, 2762 Roches (CH); Frésard, Michel, 2740 Moutier (CH)
(74) Mandataire: BOVARD AG

(56) Documents cités:
- EP-A- 0 289 333

## Description

L'invention se rapporte à une structure de machine d'usinage.

L'invention intéresse plus particulièrement une machine de tournage qui comprend deux dispositifs, chacun de support et d'entraînement en rotation d'une pièce à usiner autour d'un axe de guidage, les axes de guidage de ces dispositifs étant alignés selon un axe dit premier et lesdits dispositifs étant, d'une part, séparés d'une distance prédéterminée et, d'autre part, opposés, c'est à dire orientés de manière à autoriser une opération de reprise par l'un des dispositifs, d'une pièce entraînée par l'autre dispositif, (voir par exemple EP-A-0 289 333).

Classiquement, une machine d'usinage comprend un bâti et chaque dispositif de support et d'entraînement en rotation d'une pièce à usiner autour d'un axe de guidage est appelé "poupée" et consiste en un dispositif qui comprend :
- un support rigide relié au bâti de la machine,
- une broche porte-pièce montée rotative sur ce support rigide,
- un moteur d'entraînement en rotation de la broche.

Pour la suite de la description, chaque dispositif de support et d'entraînement en rotation d'une pièce à usiner autour d'un axe de guidage pourra être désigné par l'expression simplifiée "dispositif support de pièce".

Classiquement l'un, dit accessoire, des deux dispositifs support de pièce est mobile par rapport à l'autre, dit principal, et plus précisément, est porté par un dispositif de guidage et de déplacement vers ce dispositif principal support de pièce, de manière à autoriser une opération de reprise d'une pièce qui a déjà été usinée, cette opération de reprise de la pièce ayant lieu pendant son entraînement en rotation par ledit dispositif support de pièce principal.

Du fait qu'il doit pouvoir être déplacé, et à fortiori rapidement déplacé de manière à affecter le moins possible la durée du cycle d'usinage, le dispositif accessoire support de pièce est choisi de manière à avoir une masse moindre que celle du dispositif principal support de pièce.

Le choix d'un dispositif support de pièce qui est de moindre masse a une incidence notable sur la puissance utile de ce dispositif et sur sa capacité à réaliser l'entraînement d'une pièce en rotation pour autoriser des usinages exigeant une puissance importante.

Il existe de nombreuses machines de ce type dont les possibilités d'usinage sont affectées par la trop faible puissance utile d'un dispositif accessoire support de pièce.

Un résultat que l'invention vise à obtenir est précisément une machine comportant des dispositifs support de pièce qui, autorisant les opérations dites de reprise, sont sensiblement de même masse et de même puissance utile de manière à ne pas affecter la productivité.

Un autre inconvénient des machines connues est que le guidage du déplacement du dispositif accessoire support de pièce met en oeuvre une glissière qui doit être protégée des particules par un dispositif approprié .

Les dispositifs de protection utilisés sont en général de type télescopique et la longueur du déplacement du dispositif accessoire support de pièce rend leur construction relativement complexe.

Un autre résultat que la machine de l'invention vise à obtenir est précisément de simplifier la construction du dispositif télescopique de protection.

Est également un autre résultat que la machine de l'invention vise à obtenir, une machine dont la rigidité est accrue.

D'autres résultats que la machine permet d'obtenir seront annoncés ci-après.

L'invention a pour objet une machine du type précité, notamment caractérisée en ce que
- chacun des deux dispositifs support de pièce est supporté par un dispositif de guidage et de déplacement en translation suivant l'axe premier, lesdits dispositifs de guidage et de déplacement en translation étant actifs de manière telle que chacun des dispositifs support de pièce soit mobile entre une position d'écartement maximal du dispositif support opposé et une position de rapprochement maximal de ce dispositif support de pièce opposé, la somme des amplitudes de déplacements possibles des deux dispositifs étant au moins égale à la distance qui sépare les deux dispositifs support de pièce lorsqu'ils sont placés en leur position d'écartement maximal,
- le dispositif principal de maintien et de déplacement d'au moins un outil d'usinage est disposé de manière à autoriser le déplacement de cet outil au plus dans un plan qui, d'une part est orthogonal à l'axe premier et, d'autre part, d'autre part, situé entre les deux dispositifs support de pièce de manière à autoriser un usinage sur une pièce portée par l'un au moins de ces dispositifs support de pièce.

L'invention sera bien comprise à la lecture de la description ci-après faite à titre d'exemple non limitatif, en regard du dessin ci-annexé qui représente :

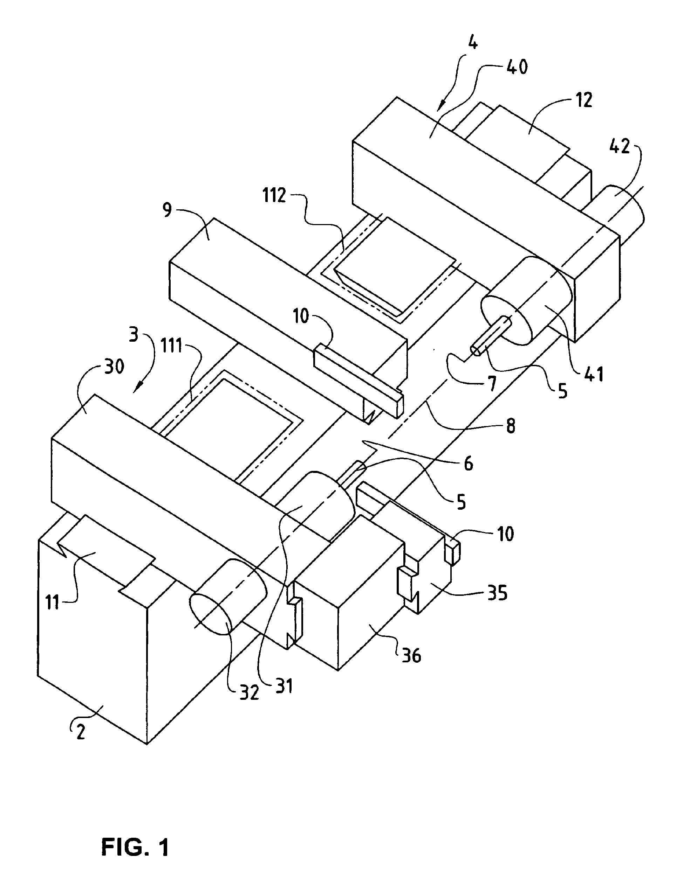

Figure 1 : une vue en perspective d'une machine selon l'invention,

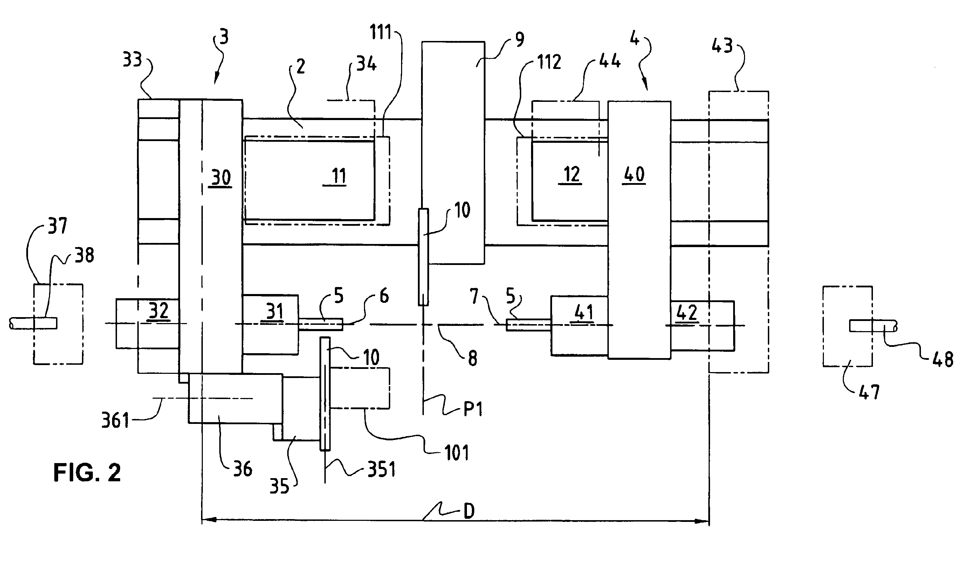

Figure 2 : une vue de dessus d'une machine selon l'invention.

En se reportant au dessin, on voit une machine d'usinage 1 comprenant un bâti 2 et, portés par ce bâti 2 :
- deux dispositifs 3, 4, dits dispositifs 3, 4 support de pièce, parce que chacun de support et d'entraînement en rotation d'une pièce 5 à usiner autour d'un axe de guidage 6, 7, les axes de guidage 6, 7 de ces dispositifs 3, 4 support de pièce étant alignés selon un axe dit premier 8 et lesdits dispositifs 3, 4 support de pièce étant, d'une part, séparés d'une distance prédéterminée et, d'autre part, opposés, c'est à dire orientés de manière à autoriser une opération de reprise par l'un 4 des dispositifs 3, 4 support de pièce, d'une pièce 5 entraînée par l'autre dispositif 3 support de pièce,
- au moins un dispositif principal 9 de maintien et de déplacement d'au moins un outil d'usinage 10 par rapport aux dispositifs 3, 4 support de pièce, de manière à permettre l'usinage d'une pièce 5 portée par l'un au moins de ces dispositifs 3, 4 support de pièce.

Classiquement, chaque dispositif 3, 4 support de pièce consiste en un dispositif qui comprend :
- un support rigide 30, 40 relié au bâti 2 de la machine 1,
- une broche 31, 41 porte-pièce montée rotative sur ce support rigide 30, 40,
- un moteur 32, 42 d'entraînement en rotation de la broche 31, 41.

De manière remarquable :
- chacun des deux dispositifs 3, 4 support de pièce est supporté par un dispositif 11, 12 de guidage et de déplacement en translation suivant l'axe premier 8, lesdits dispositifs 11, 12 de guidage et de déplacement en translation étant actifs de manière telle que chacun des dispositifs 3, 4 support de pièce soit mobile entre une position 33, 43 d'écartement maximal du dispositif support opposé et une position 34, 44 de rapprochement maximal de ce dispositif 3, 4 support de pièce opposé, la somme des amplitudes de déplacements possibles des deux dispositifs 3, 4 étant au moins égale à la distance qui sépare les deux dispositifs 3, 4 support de pièce lorsqu'ils sont placés en leur position 33, 43 d'écartement maximal,
- le dispositif 9 principal de maintien et de déplacement d'au moins un outil d'usinage 10 est disposé de manière à autoriser le déplacement de cet outil 10 au plus dans un plan P1 qui, d'une part est orthogonal à l'axe premier 8 et, d'autre part, situé entre les deux dispositifs 3, 4 support de pièce de manière à autoriser un usinage sur une pièce 5 portée par l'un au moins de ces dispositifs 3, 4 support de pièce.

Bien que cela n'apparaisse pas de manière flagrante sur les dessins, chaque dispositif 11, 12 de guidage et de déplacement en translation est protégé, notamment du contact avec des particules détachées lors de l'usinage au moyen d'un dispositif de protection télescopique 111, 112.

Sur la machine 1 de l'invention le rapprochement des dispositifs 3, 4 support de pièce opposés résulte du déplacement des deux dispositifs 3, 4 ce qui permet de s'affranchir au moins en partie :
- de l'inertie d'un des dispositifs 3, 4 support de pièce, c'est à dire de pouvoir utiliser un dispositif 3, 4 dont la taille et donc corrélativement la masse et la puissance utile sont accrues,
- de la complexité de chacun des dispositifs 111, 112 de protection télescopique, dont la longueur est réduite de moitié par rapport à ceux des machines de l'état de la technique.

Dans une forme préférée de réalisation, la machine 1 de l'invention est remarquable en ce qu'au moins l'un des deux dispositifs 3, 4 support de pièce porte au moins un dispositif 35, 36 annexe de maintien et de déplacement d'au moins un outil d'usinage 10, dans au moins une direction déterminée 351, 361.

Le fait que le dispositif 35, 36 annexe de support et de déplacement soit porté par au moins l'un des deux dispositifs 3, 4 support de pièce, permet, notamment, d'accroître la rigidité de la machine 1 de l'invention.

Selon une forme de réalisation, la machine 1 de l'invention est remarquable en ce que le dispositif 35, 36 annexe de maintien et de déplacement d'au moins un outil d'usinage 10 assure le guidage et le déplacement de cet outil 10 au moins dans une direction 351 parallèle au plan P1 de déplacement de l'outil 10 du dispositif 9 principal de maintien et de déplacement.

Conformément à une forme préférée de réalisation, la machine 1 de l'invention est remarquable en ce qu'elle comprend deux dispositifs 35, 36 annexes de maintien et de déplacement d'au moins un outil d'usinage 10 qui sont portés l'un par l'autre de manière à assurer le guidage et le déplacement de l'outil 10 dans au moins deux directions 351, 361 perpendiculaires entre elles.

Dans une forme préférée de réalisation, la machine 1 de l'invention est remarquable en ce que chacun des deux dispositifs 3, 4 support de pièce porte au moins un dispositif 35, 36 annexe de maintien et de déplacement d'au moins un outil d'usinage 10, dans au moins une direction déterminée 351, 361.

Tel que cela a été symbolisé sur les dessins, la machine selon l'invention est équipée de deux dispositifs ravitailleurs 37, 47 délivrant chacune des barres 38, 48 de matériau à l'un des deux dispositifs 3, 4 support de pièce.

Chacun des deux dispositifs 3, 4 support de pièce de la machine selon l'invention peut donc avantageusement être utilisé distinctement de l'autre, comme s'il s'agissait du dispositif 3, 4 support de pièce d'une machine distincte.

Cela accroît encore les capacités de la machine.

La machine d'usinage selon l'invention est encore remarquable en ce qu'au moins un dispositif 35, 36 annexe de maintien et de déplacement qu'elle comprend, porte au moins un appareil 101 de préhension d'une pièce 5.

Cette particularité technique permet d'accroître les apptitudes de la machine en autorisant le chargement de pièces sur le dispositif 3, 4 support de pièce qui est équipé.

Les caractéristiques techniques de l'appareil 101 de préhension d'une pièce 5 ne sont pas précisées car elles sont à la portée de l'homme du métier.

## Revendications

1. Machine d'usinage (1) comprenant un bâti (2) et, portés par ce bâti (2), deux dispositifs (3, 4), dits dispositifs (3, 4) support de pièce, parce que chacun de support et d'entraînement en rotation d'une pièce (5) à usiner autour d'un axe de guidage (6, 7), les axes de guidage (6, 7) de ces dispositifs (3, 4) support de pièce étant alignés selon un axe dit premier (8) et lesdits dispositifs (3, 4) support de pièce étant, d'une part, séparés d'une distance prédéterminée et, d'autre part, opposés, c'est à dire orientés de manière à autoriser une opération de reprise par l'un (4) des dispositifs (3, 4) support de pièce, d'une pièce (5) entraînée par l'autre dispositif (3) support de pièce,
- au moins un dispositif principal (9) de maintien et de déplacement d'au moins un outil d'usinage (10) par rapport aux dispositifs (3, 4) support de pièce, de manière à permettre l'usinage d'une pièce (5) portée par l'un au moins de ces dispositifs (3, 4) support de pièce.
cette machine d'usinage (1) étant **caractérisée en ce que** :
- chacun des deux dispositifs (3, 4) support de pièce est supporté par un dispositif (11, 12) de guidage et de déplacement en translation suivant l'axe premier (8), lesdits dispositifs (11, 12) de guidage et de déplacement en translation étant actifs de manière telle que chacun des dispositifs (3, 4) support de pièce soit mobile entre une position (33, 43) d'écartement maximal du dispositif support opposé et une position (34, 44) de rapprochement maximal de ce dispositif (3, 4) support de pièce opposé, la somme des amplitudes de déplacements possibles des deux dispositifs (3, 4) étant au moins égale à la distance qui sépare les deux dispositifs (3, 4) support de pièce lorsqu'ils sont placés en leur position (33, 43) d'écartement maximal,
- le dispositif (9) principal de maintien et de déplacement d'au moins un outil d'usinage (10) est disposé de manière à autoriser le déplacement de cet outil (10) au plus dans un plan (P1) qui, d'une part est orthogonal à l'axe premier (8) et, d'autre part, situé entre les deux dispositifs (3, 4) support de pièce de manière à autoriser un usinage sur une pièce (5) portée par l'un au moins de ces dispositifs (3, 4) support de pièce.

2. Machine d'usinage selon la revendication 1 **caractérisée en ce qu'**au moins l'un des deux dispositifs (3, 4) support de pièce porte au moins un dispositif (35, 36) annexe de maintien et de déplacement d'au moins un outil d'usinage 10, dans au moins une direction déterminée (351, 361).

3. Machine d'usinage selon la revendication 2 **caractérisée en ce que** le dispositif (35, 36) annexe de maintien et de déplacement d'au moins un outil d'usinage (10) assure le guidage et le déplacement de cet outil (10) au moins dans une direction (351) parallèle au plan (P1) de déplacement de l'outil (10) du dispositif (9) principal de maintien et de déplacement.

4. Machine d'usinage selon la revendication 3 **caractérisée en ce qu'**elle comprend deux dispositifs (35, 36) annexes de maintien et de déplacement d'au moins un outil d'usinage (10) qui sont portés l'un par l'autre de manière à assurer le guidage et le déplacement de l'outil (10) dans au moins deux directions (351, 361) perpendiculaires entre elles.

5. Machine d'usinage selon l'une des revendications 3 à 4 **caractérisée en ce que** chacun des deux dispositifs (3, 4) support de pièce porte au moins un dispositif (35, 36) annexe de maintien et de déplacement d'au moins un outil d'usinage (10), dans au moins une direction déterminée (351, 361).

6. Machine d'usinage selon l'une des revendications 1 à 5 **caractérisée en ce que** la machine selon l'invention est équipée de deux dispositifs ravitailleurs (37, 47) délivrant chacune des barres (38, 48) de matériau à l'un des deux dispositifs (3, 4) support de pièce.

7. Machine d'usinage selon l'une des revendications 1 à 6 **caractérisée en ce qu'**au moins un dispositif (35, 36) annexe de maintien et de déplacement qu'elle comprend, porte au moins un appareil (101) de préhension d'une pièce (5).

## Claims

1. Machining centre (1) comprising a frame (2) and, borne by this frame (2), two devices (3, 4) referred to as workpiece support devices because each allows a workpiece (5) to be machined to be supported and driven in rotation about a control axis (6, 7), the control axes (6, 7) of these workpiece support devices (3, 4) being aligned along an axis referred to as the first axis (8), and the said workpiece support devices (3, 4) being, on the one hand, separated by a predetermined distance, and, on the other hand, being opposing, i.e. oriented in such a way as to bring about an operation of taking by one (4) of the workpiece support devices (3, 4) of a workpiece (5) driven by the other workpiece support device (3),
- at least one main device (9) for holding and for displacement of at least one machining tool (10) relative to the workpiece support devices (3, 4) in such a way as to allow the machining of a workpiece (5) borne by at least one of these workpiece support devices (3, 4),
this machining centre (1) being **characterised in that**:
- each of the two workpiece support devices (3, 4) is supported by a device (11, 12) for control and translatory displacement along the first axis (8), the said control and translatory displacement devices (11. 12) being actuated in such a way that each of the workpiece support devices (3, 4) is movable between a position (33, 43) of maximal distance from the opposite support device and a position (34, 44) of maximal bringing closer together with this opposite workpiece support device (3, 4), the sum of the ranges of possible displacements of the two workpiece support devices (3, 4) being at least equal to the distance which separates the two workpiece support devices (3, 4) when they are placed in their maximal spaced apart position (33, 43),
- the main device (9) for holding and for displacement of at least one machining tool (10) is disposed in such a way as to bring about the displacement of this tool (10) at most in a plane (P1) which, on the one hand, is orthogonal to the first axis (8), and, on the other hand, is situated between the two workpiece support devices (3, 4) in such a way as to bring about a machining of a workpiece (5) borne by at least one of these workpiece support devices (3, 4).

2. Machining centre according to claim 1, **characterised in that** at least one of the two workpiece support devices (3, 4) bears at least one supplementary device (35, 36) for holding and for displacement of at least one machining tool (10) in at least one predetermined direction (351, 361).

3. Machining centre according to claim 2, **characterised in that** the supplementary device (35, 36) for holding and for displacement of at least one machining tool (10) ensures the control and the displacement of this tool (10) at least in one direction (351) parallel to the plane (P1) of displacement of the tool (10) of the main holding and displacement device (9).

4. Machining centre according to claim 3, **characterised in that** it comprises two supplementary devices (35, 36) for holding and displacement of at least one machining tool (10) which are borne one by the other in such a way as to ensure the control and the displacement of the tool (10) in at least two directions (351, 361) perpendicular to one another.

5. Machining centre according to one of the claims 3 to 4, **characterised in that** each of the two workpiece support devices (3, 4) bears at least one supplementary device (35, 36) for holding and displacement of at least one machining tool (10) in at least one predetermined direction (351, 361).

6. Machining centre according to one of the claims 1 to 5, **characterised in that** Machining centre according to the invention is equipped with two feeding devices (37, 47) each delivering bars (38, 48) of material to one of the two workpiece support devices (3, 4).

7. Machining centre according to one of the claims 1 to 6, **characterised in that** at least one supplementary holding and displacement device (35, 36) which it comprises bears at least one apparatus (101) for prehension of a workpiece (5).

## Patentansprüche

1. Bearbeitungsmaschine (1) bestehend aus einem Maschinenbett (2) und zwei von diesem Maschinenbett (2) gehaltenen Vorrichtungen (3, 4), die als Werkstückhaltevorrichtungen (3, 4) bezeichnet werden, da jede zum Halten und zum drehenden Antrieb eines um eine Führungsachse (6, 7) zu bearbeitenden Werkstücks (5) dient, wobei die Führungsachsen (6, 7) dieser Werkstückhaltevorrichtungen (3, 4) nach einer sogenannten ersten Achse (8) ausgerichtet sind und diese genannten Werkstückhaltevorrichtungen (3, 4) einerseits durch einen vorgegebenen Abstand voneinander getrennt sind und sich andererseits gegenüber liegen, das heißt, dass sie so ausgerichtet sind, dass sie einen Vorgang zur Übernahme eines von der anderen Werkstückhaltevorrichtung (3) angetriebenen Werkstücks (5) durch eine Vorrichtung (4) der Werkstückhaltevorrichtungen (3, 4) gestatten,
- aus mindestens einer Hauptvorrichtung (9) zum Halten und Verfahren von mindestens einem Bearbeitungswerkzeug (10) zu den Werkstückhaltevorrichtungen (3, 4), so dass eine Bearbeitung des von mindestens einer der Werkstückhaltevorrichtungen (3, 4) gehaltenen Werkstücks (5) ermöglicht wird,
wobei diese Bearbeitungsmaschine (1) **dadurch gekennzeichnet ist, dass**:
- jede der beiden Werkstückhaltevorrichtungen (3, 4) von einer Vorrichtung (11, 12) zur Führung und Translationsbewegung entlang der ersten Achse (8) gehalten wird, wobei die beiden Vorrichtungen (11, 12) zur Führung und Translationsbewegung so wirken, dass jede der Werkstückhaltevorrichtungen (3, 4) beweglich zwischen einer zur gegenüberliegenden Haltevorrichtung maximal auseinandergefahrenen Position (33, 43) und einer zur gegenüberliegenden Haltevorrichtung maximal zusammengefahrenen Position (34, 44) gelagert ist, wobei die Summe der möglichen Verfahrweiten der beiden Vorrichtungen (3, 4) mindestens gleich der Entfernung ist, welche die beiden Werkstückhaltevorrichtungen (3, 4) voneinander trennt, wenn sie sich in ihrer maximal auseinandergefahrenen Position (33, 43) befinden.
- die Hauptvorrichtung (9) zum Halten und Verfahren von mindestens einem Bearbeitungswerkzeug (10) so angeordnet ist, dass sie ein Verfahren dieses Werkzeugs (10) in höchstens einer Ebene (P1) zulässt, die einerseits orthogonal zur ersten Achse (8) ist und andererseits zwischen den beiden Werkstückhaltevorrichtungen (3, 4) liegt, so dass eine Bearbeitung an einem durch mindestens eine dieser Werkstückhaltevorrichtungen (3, 4) gehaltenen Werkstück (5) gestattet wird.

2. Bearbeitungsmaschine nach Anspruch 1, **dadurch gekennzeichnet, dass** mindestens eine der Werkstückhaltevorrichtungen (3, 4) mindestens eine angebaute Vorrichtung (35, 36) zum Halten und Verfahren von mindestens einem Bearbeitungswerkzeug (10) in mindestens eine vorgegebene Richtung (351, 361) hält.

3. Bearbeitungsmaschine nach Anspruch 2, **dadurch gekennzeichnet, dass** die angebaute Vorrichtung (35, 36) zum Halten und Verfahren von mindestens einem Bearbeitungswerkzeug (10) die Führung und das Verfahren dieses Werkzeugs (10) in mindestens einer zur Ebene (P1) parallelen Richtung (351) des Verfahrwegs des Werkzeugs (10) der Hauptvorrichtung (9) zum Halten und Verfahren gewährleistet.

4. Bearbeitungsmaschine nach Anspruch 3, **dadurch gekennzeichnet, dass** sie zwei angebaute Vorrichtungen (35, 36) zum Halten und Verfahren von mindestens einem Bearbeitungswerkzeug (10) aufweist, von dem die eine die andere hält, so dass sie die Führung und das Verfahren des Werkszeugs (10) in mindestens zwei zueinander senkrechte Richtungen (351, 361) gewährleistet.

5. Bearbeitungsmaschine nach einem der Ansprüche 3 bis 4, **dadurch gekennzeichnet, dass** jede der beiden Werkstückhaltevorrichtungen (3, 4) mindestens eine angebaute Vorrichtung (35, 36) zum Halten und Verfahren von mindestens einem Bearbeitungswerkzeug (10) in mindestens eine vorgegebene Richtung (351, 361) hält.

6. Bearbeitungsmaschine nach einem der Ansprüche 1 bis 5, **dadurch gekennzeichnet, dass** die erfindungsgemäße Maschine mit zwei Zuführvorrichtungen (37, 47) ausgerüstet ist, von denen jede eine der beiden Werkstückhaltevorrichtungen (3, 4) mit Werkstoffstangen (38, 48) versorgt.

7. Bearbeitungsmaschine nach einem der Ansprüche 1 bis 6, **dadurch gekennzeichnet, dass** mindestens eine angebaute Vorrichtung (35, 36) zum Halten und Verfahren, welche sie aufweist, mindestens ein Gerät 101 zum Greifen des Werkstücks (5) hält.
